# NEUE EUROPÄISCHE PATENTSCHRIFT

(11) **EP 3 400 184 B2**
(45) Veröffentlichungstag und Bekanntmachung des Hinweises auf die Entscheidung über den Einspruch: **15.11.2023**
(45) Hinweis auf die Patenterteilung: 22.07.2020
(21) Anmeldenummer: 17734297.9
(22) Anmeldetag: 29.06.2017
(51) Int. Cl.: B65D 85/804

(54) **PORTIONSBEHÄLTER FÜR EXTRAHIERBARE SUBSTANZEN ZUR HERSTELLUNG EINES GETRÄNKS**
CONTAINER FOR THE PREPARATION OF BEVERAGES
RECIPIENT POUR LA PREPARATION DES BOISSONS

(30) Priorität: 01.07.2016 DE 102016112135
(43) Veröffentlichungstag der Anmeldung: 14.11.2018
(60) Teilanmeldung: 20184470.1
(73) Patentinhaber: BBC Bremer Bagasse Company GmbH & Co. KG, 28217 Bremen (DE)
(72) Erfinder: WOLF-ROONEY, David, 28719 Bremen (DE)
(74) Vertreter: Träger, Denis
(86) Internationale Anmeldenummer: PCT/EP2017/066132
(87) Internationale Veröffentlichungsnummer: WO 2018/002223

(56) Entgegenhaltungen:
- EP-A1- 2 218 653
- EP-A1- 2 218 653
- EP-A2- 2 364 930
- WO-A1-03/002423
- WO-A1-2015/082982
- WO-A1-2015/162632
- WO-A1-2016/033682
- WO-A1-2016/079701
- WO-A1-2016/103104
- US-A1- 2016 325 898

## Beschreibung

Die Erfindung betrifft einen Portionsbehälter für extrahierbare Substanzen, insbesondere zur Herstellung eines Getränks gemäß dem Oberbegriff des Anspruch 1.

Die hier beschriebenen Portionsbehälter für extrahierbare Substanzen dienen typischerweise dazu, Getränke oder Brühgetränke herzustellen. Da es sich bei den Getränken zumeist um Kaffee handelt, werden derartige Behälter auch als "Kaffeekapseln" bezeichnet. Im Innenraum der Portionsbehälter, also umgeben von einer Behälterwandung, befindet sich daher die entsprechende zu extrahierende Substanz, in der Regel in Pulverform. Beispielsweise kann es sich um Pflanzenbestandteile, wie insbesondere Kaffee, Tee, Kakao und ähnliches, handeln, die insbesondere in getrockneter Form vorliegen.

Die grundlegende Funktionsweise der entsprechenden Brühmaschinen besteht darin, dass Wasser erhitzt wird und unter Druck durch einen in die Maschine eingesetzten Portionsbehälter gepresst wird. Damit wird das heiße Wasser auch durch die zu extrahierende Substanz gepresst, so dass somit ein Aromaauszug hergestellt werden kann. Der Portionsbehälter muss dazu wenigstens zwei Öffnungen aufweisen, um das Brühwasser hindurchpressen zu können. Dazu werden üblicherweise entsprechende Öffnungen beim Einsetzen in die Maschine automatisch in die Behälter eingeschnitten. Typischerweise sind die Öffnungen zumindest im Wesentlichen gegenüberliegend angeordnet, also insbesondere an Ober- und Unterseite des Portionsbehälters. Es gibt dazu unterschiedliche Typen von Brühmaschinen, die verschiedene Typen Kapseln unterschiedlicher Form einsetzen. Die Funktionsweise ist aber im Wesentlichen immer dieselbe.

In der Regel sind die Kapseln oder Portionsbehälter aromadicht versiegelt, um eine unerwünschtes Verfliegen des Aromas der Substanzen im Behälter zu verhindern. Dazu werden üblicherweise von Hause aus aromadichte und damit vorzugsweise gasdichte Materialien als Material zur Herstellung der Portionsbehälter verwendet. Insbesondere wird typischerweise Aluminiumfolie verwendet. Diese, aber auch andere Materialien, wie Kunststoffe oder Kunststoffbeschichtungen oder ähnliches sorgen dafür, dass große Mengen Abfall anfallen, da eine Wiederverwertung aufwändig oder nicht lohnend ist. Alle für derartige Kapseln bisher vorgeschlagenen wiederverwertbaren Materialien bieten keinerlei Schutz vor Aromaverlust, sind also nicht aromadicht. So werden die Portionsbehälter zum Aromaschutz einzeln in Plastikfolien eingepackt, die einerseits separat entfernt werden müssen und andererseits wieder zusätzlichen Abfall produzieren. In der EP 2 218 653 A1 ist eine Kapsel mit einer Hülle aus einer Faserschicht auf der Innenseite und einer Versschlussmembran als Deckel beschrieben, wobei die Faserhülle und die Membran aus biologisch abbaubaren Materialien hergestellt sind.

Aus der WO 2015/162632 A1 geht eine biologisch abbaubare Kapsel mit einer Hülle und einer Membran hervor, die aus kompostierbaren Polymeren hergestellt ist.

Die EP 2 364 930 A2 beschreibt eine Kapsel aus verschiedenen Materialien, wie Aluminium, Plastik und Papier in Kombination mit verschiedenen Polymeren.

In der WO 03/002423 A1 ist eine flexible Kartusche zum Herstellen von Kaffeegetränken basierend aus verschiedenen Materialien beschrieben, die auch biologisch abbaubar sein können.

In der WO 2015/082982 A1 ist eine Kapsel mit einer Hülle und einem Verschlusselement aus einer Vielzahl verschiedener Materialien beschrieben, wie Polylaktatsäure als spezielle Schicht. Unterschiedliche Kombinationen von Materialien werden diskutiert.

Aus der WO 2016/103104 A1 ist eine Kartusche mit einer Hülle und einem Verschlussdeckel bekannt, wobei allgemein ein "Biomaterial" beschrieben wird.

Aus der WO 2016/079701 A1 ist eine Kaffeekapsel bekannt, die aus biokompatiblen Materialien zusammengesetzt ist.

Nachteilig an den bekannten Portionsbehältern beziehungsweise Kapseln ist im Ergebnis, dass große Müllmengen anfallen. Die bekannten Portionsbehälter sind zwar aromadicht oder zumindest aromadicht verpackt, sind aber aus einem wenig umweltfreundlichen Materialmix hergestellt.

Es ist daher eine Aufgabe der Erfindung, einen Portionsbehälter beziehungsweise eine Kapsel anzugeben, die die vorstehend genannten Nachteile vermeidet. Insbesondere soll die Umweltverträglichkeit verbessert werden.

Diese Aufgabe wird gelöst durch einen Portionsbehälter für extrahierbare Substanzen mit den Merkmalen des Anspruch 1. Ein derartiger Portionsbehälter für extrahierbare Substanzen, insbesondere zur Herstellung eines Getränks, weist einen von einer Behälterwand beziehungsweise Behälterwandung umgebenen Innenraum zur zumindest im Wesentlichen aromadichten Aufnahme der wenigstens einen extrahierbaren Substanz auf. Dabei ist die extrahierbare Substanz vorzugsweise aus Kaffee, Tee, Kakao, Schokolade oder ähnlichen verzehrbaren Produkten ausgewählt. Der erfindungsgemäße Portionsbehälter zeichnet sich dadurch aus, dass die Behälterwandung vollständig biologisch abbaubar ist. Damit wir gegenüber dem Stand der Technik ein erheblicher Vorteil in Bezug auf die Umweltverträglichkeit erreicht. Die aus dem Stand der Technik bekannten Behälter sind dagegen gerade nicht vollständig biologisch abbaubar oder nicht aromadicht.

Vorzugsweise ist die Behälterwand aus wenigstens einem biologisch abbaubaren Material gebildet. Das Material ist insbesondere abschnittsweise und/oder schichtweise aufgebaut, vorzugsweise sind mehrere Materialien miteinander verbunden, vorzugsweise verklebt.

Das wenigstens eine biologisch abbaubare Material kann insbesondere Zellulose (cellulose) und/oder Holzstoff (wood pulp) und/oder Zellulosezellstoff (cellulose pulp) und/oder Zuckerrohrzellstoff (sugar cane pulp) und/oder Kombinationen davon beinhalten oder daraus bestehen. Insbesondere kann der Behälter aus Papier oder Pappe ausgebildet sein. Diese Materialien werden erfindungsgemäß für die Herstellung des Behälters bevorzugt, da sie die eingangs formulierte Aufgabe lösen.

Bevorzugt wird zur Herstellung der Kapseln, insbesondere der Behälterwandung, eine Mischung aus Bambusfasern und Zuckerrohrfasern verwendet. Das Verhältnis von Bambusfasern zu Zuckerrohrfasern liegt dabei vorzugsweise zwischen 90% zu 10% und 50% zu 50%, weiter vorzugsweise bei etwa 30% zu 70%. Diese Mischungsverhältnisse von Bambusfasern zu Zuckerrohrfasern haben sich erfindungsgemäß besonders bewährt. Damit lassen sich haltbare und/oder aromadichte und/oder biologisch abbaubare Kapseln herstellen.

Insbesondere weist die Behälterwandung und/oder das biologisch abbaubare Material eine biologisch abbaubare Beschichtung und/oder Ummantelung auf. Dabei handelt es sich vorzugsweise um eine auf Stärke oder Stärkemehl basierende Ummantelung. Eine derartige Ummantelung sorgt für eine besonders gute Aromaabdichtung. Sie kann die Dichtigkeit der eingesetzten Materialien weiter verbessern. Gleichzeitig ist sie biologisch abbaubar.

In einer bevorzugten Ausführung der Erfindung ist Zellstoff oder Zellulose als Behälterwandung mit einer Stärkemehl-Ummantelung vorgesehen. Diese Ausbildung hat sich als besonders stabil und dicht herausgestellt. Sie erfüllt in besonderem Maße die erfindungsgemäßen Vorteile.

Der Innenraum ist bevorzugt von einer Beschichtung oder Auskleidung oder Umhüllung umgeben ist. Die Beschichtung oder Auskleidung oder Umhüllung ist insbesondere auf die Innenflächen der Behälterwandung aufgebracht. Eine solche Beschichtung sorgt erfindungsgemäß für eine Verbesserung der Eigenschaften des Grundmaterials der Behälterwandung.

Weiterhin ist der Innenraum vorzugsweise gegenüber der Umgebung aromadicht oder zumindest nahezu aromadicht verschlossen. Es wird also eine Versiegelung beziehungsweise Abdichtung des Innenraums gegenüber der Umgebung durch geeignete Ausbildung und/oder Behandlung der Behälterwandung erreicht.

Vorzugsweise ist im Innenraum wenigstens eine biologisch abbaubare Einlage angeordnet. Weiter vorzugsweise ist ein biologisch abbaubares Filter und/oder Filterelement für die wenigstens eine extrahierbare Substanz angeordnet. Einlage wie auch Filter dienen dazu, ein Austreten der zu extrahierenden Substanz aus dem Behälter zu verhindern. Damit weist der Filter beziehungsweise die Einlage eine Struktur auf, die ein Hindurchtreten der Substanz verhindert. Insbesondere sind die Poren des Filters beziehungsweise der Einlage hinreichend klein ausgebildet, vorzugsweise kleiner als 0,5 mm, weiter vorzugsweise kleiner als 0,1 mm. Die Dicke der Einlage beziehungsweise des Filters oder Filterelements beträgt bevorzugt in etwa zwischen 1 µm und 1000 µm, besonders bevorzugt in etwa zwischen 10 µm und 150 µm.

Bevorzugt ist die Behälterwandung aus mehreren Behälterteilen gebildet. Es handelt sich vorzugsweise wenigstens um ein Behälterunterteil und einen Behälterdeckel. Die Behälterteile, insbesondere das Behälterunterteil und der Behälterdeckel, sind insbesondere miteinander verbunden, vorzugsweise dauerhaft. Damit kann das Befüllen auf einfache Weise erfolgen. Gleichzeitig kann ein aromadichter Verschluss gewährleistet werden. Ein derartige Behälterform wird gelegentlich auch als Napf bezeichnet. Der Behälterdeckel kann vorzugsweise aus einem Filterpapier gebildet sein, vorzugsweise einem ein- oder mehrlagigen Filterpapier. Das Filterpapier weist insbesondere ein Flächengewicht von zwischen 20 g/m2 und 100 g/m2 auf.

Vorzugsweise ist wenigstens ein biologisch abbaubares Verstärkungselement vorgesehen. Vorzugsweise handelt es sich um wenigstens ein rippenartiges Verstärkungselement. Typischerweise ist eine Vielzahl Verstärkungselemente vorgesehen. Dies dient zur Stabilisierung der Behälterwandung gegen mechanische Einwirkung. Dabei können einzelne Verstärkungsrippen vorgesehen sein, die beispielsweise innen auf die Behälterwandung aufgebracht sind. Es kann aber auch ein mehr oder weniger komplettes, im Innenraum angeordnetes Gerüst vorgesehen sein.

Die Behälterwandung, vorzugsweise das Behälterunterteil, ist insbesondere zumindest abschnittsweise zylinderartig und/oder konusartig ausgebildet. Bevorzugt wird die Behälterwandung aus wenigstens zwei miteinander verbundenen zylinderartigen Abschnitten und/oder konusartigen Abschnitten gebildet. Insbesondere weisen die konusartigen Abschnitte unterschiedliche Öffnungswinkel auf. Damit wird eine stabile und extraktionsfreundliche Ausbildung der Kapsel ermöglicht.

Die Behälterwandung, insbesondere das Behälterunterteil, aus vorzugsweise zwei Abschnitten mit unterschiedlichen Querschnitt gebildet ist, wobei zwischen den beiden Abschnitten eine umlaufende Stufe oder Kante ausgebildet ist.

Vorzugsweise weist die Behälterwandung, insbesondere das Behälterunterteil, mehrere Öffnungen zum Durchtritt von Brühflüssigkeit auf. Es handelt sich vorzugsweise um schlitzförmige Öffnungen, wobei die Öffnungen vorzugsweise im Bereich der umlaufenden Kante oder Stufe und/oder in einem Boden und/oder Bodenbereich des Behälterunterteils angeordnet sein können. Die Öffnungen können bereits vorgefertigt sein oder erst im Bereich der Brühmaschine eingebracht werden, beispielsweise durch geeignete Schneidvorrichtungen oder Perforationsvorrichtungen. Vorzugsweise ist der Boden und/oder Bodenbereich des Behälterunterteils flächenartig ausgebildet, gegebenenfalls als ebene Fläche. Damit kann eine geeignete und vorzugsweise großflächiger Durchtritt des Brühwassers sichergestellt werden. So wird eine optimale Extraktion der extrahierbaren Substanz in der Kapsel gewährleistet. Die Öffnungen weisen bevorzugt eine Breite von 0,01 mm bis 1 mm, besonders bevorzugt 0,05 mm bis 0,2 mm auf. Das Länge-Breite-Verhältnis der insbesondere schlitzförmigen Öffnungen beträgt bevorzugt zwischen 1 und 50, besonders bevorzugt zwischen 5 und 20. Die Anzahl der Öffnungen in der Kante oder Stufe beträgt bevorzugt zwischen 1 und 100, besonders bevorzugt zwischen 10 und 30.

Besonders bevorzugt weist die Behälterwandung einen umlaufenden Flansch auf, vorzugsweise an dem Endbereich des Behälterunterteils mit dem größten Querschnitt. Der Flansch kann einerseits zur Abdichtung in der Brühmaschine verwendet werden. Andererseits kann er als Verbindungsbereich zwischen Behälterdeckel und Behälterunterteil dienen. Insbesondere kann der Behälterdeckel dazu auf das Behälterunterteil geklebt werden, vorzugsweise im Bereich des Flansches. Vorzugsweise ist eine umlaufende Dichtung vorgesehen, insbesondere eine Dichtung nach Art eines O-Rings. Die Dichtung sorgt für eine Abdichtung der Kapsel bei der Extraktion in den Maschine. Die Dichtung ist insbesondere unterseitig des Flansches vorgesehen.

Typische Wandstärken der hier beschriebenen Portionsbehälter liegen zwischen 0,1 mm und 3 mm, vorzugsweise zwischen 0,3 mm und 1,5 mm. Damit wird ein Kompromiss zwischen Steifigkeit und Dichtigkeit einerseits und Materialverbrauch beziehungsweise großer Wandstärke andererseits eingegangen. Die tatsächlichen Dicken können davon aber auch nach oben oder unten abweichen.

Ein bevorzugtes Ausführungsbeispiel der Erfindung wird im Weiteren anhand der Zeichnungen näher beschrieben. In diesen zeigen:
Fig. 1 ein erstes Ausführungsbeispiel eines erfindungsgemäßen Portionsbehälters in Form einer Kapsel,
Fig. 2 ein weiteres Ausführungsbeispiel der Erfindung, und
Fig. 3 ein drittes Ausführungsbeispiel der Erfindung.

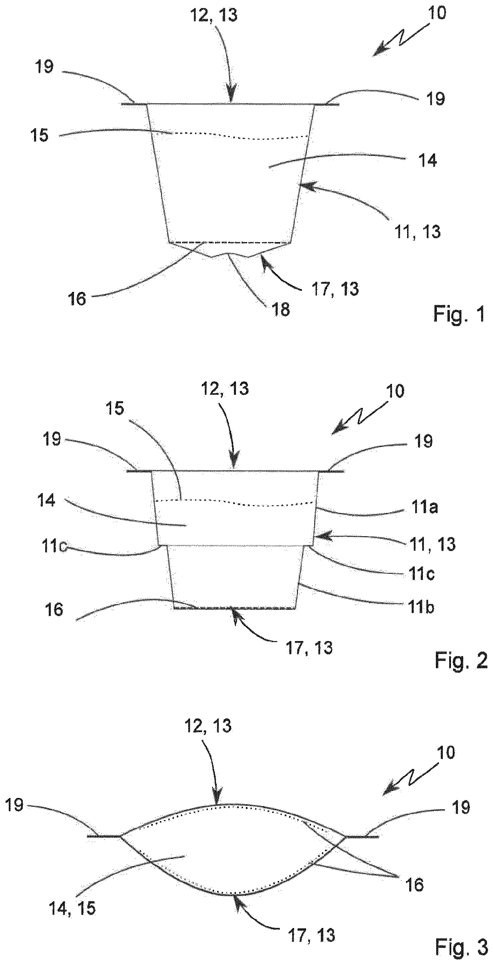

In der Fig. 1 ist ein Portionsbehälter 10 nach Art beziehungsweise in Form einer sogenannten "Kaffeekapsel" gezeigt.

Dieser weist einerseits ein Behälterunterteil 11 und andererseits einen Behälterdeckel 12 auf. Der Behälterdeckel 12 und das Behälterunterteil 11 bilden zusammen insgesamt die Behälterwand 13 aus. Diese Behälterwand 13 umgibt damit den im Innern angeordneten Innenraum 14. Im Innenraum 14 ist außerdem die extrahierbare Substanz 15 eingefüllt. Deren oberer Füllstand ist dabei durch eine punktierte Linie angedeutet.

Im unteren Bereich des Portionsbehälters 10 ist außerdem eine Einlage in Form eines Filters 16 oder Filterelements angeordnet. Dieser dient dazu, im Falle der Benutzung der Kapsel 10 in der entsprechenden Brühmaschine zu verhindern, dass die extrahierbare Substanz 15 zusammen mit dem Brühwasser aus dem Portionsbehälter 10 austritt.

In einer derartigen Brühmaschine wird dazu üblicherweise oben im Bereich des Behälterdeckels 12 dem Portionsbehälter 10 Wasser zugeführt, das typischerweise unter Druck steht und erhitzt ist. Dazu werden üblicherweise im Bereich des Deckels 12 mehrere Öffnungen mittels entsprechender Schneidwerkzeuge beim Einsetzen in die Brühmaschine erzeugt. Eine derartige Perforation kann vorzugsweise in Form von Löchern oder Schlitzen erfolgen. Durch diese kann dann das Wasser in den Portionsbehälter 10 eindringen.

Im unteren Bereich des Behälterbodens 17 ist außerdem eine vordefinierte Austrittstelle 18 vorhanden. Diese Austrittstelle 18 wird typischerweise mit einer entsprechenden Austrittsöffnung versehen, wenn der Portionsbehälter 10 eingesetzt wird. Durch eine derartige Austrittsöffnung kann dann entsprechend das oben in den Behälter 10 eingespritzte Wasser mit dem Aromaextrakt austreten.

Im oberen Bereich des Behälters 10 ist ein umlaufender Flansch 19 vorgesehen. Dieser dient primär dazu, eine entsprechende Abdichtung in einer Brühmaschine zu erreichen.

Die einzelnen Bestandteile des Portionsbehälters 10, insbesondere das Behälterunterteil 11 einerseits und der Behälterdeckel 12 andererseits, sind in der Regel fest miteinander verbunden. So kann eine aromadichte Ausbildung ermöglicht werden. Dies wird dadurch sichergestellt, dass alle Bestandteile der Behälterwandung eine hinreichende Dichtigkeit gegenüber Aromaverlusten aufweisen.

Der Flansch 19 stellt dabei üblicherweise die Kontaktstelle zwischen Behälterdeckel 12 und Behälterunterteil 11 dar. Diese beiden Bestandteile des Portionsbehälters 10 können miteinander verbunden sein, vorzugsweise dauerhaft, beispielsweise durch Verkleben.

Die erfindungsgemäße Ausbildung der Behälterwandung 13 zeichnet sich dadurch aus, dass der gesamte Portionsbehälter 10 biologisch abbaubar ist. Dies bedeutet insbesondere, dass eine Kompostierung ohne weiteres erfolgen kann. Rückstände oder nicht biologisch abbaubare Bestandteile sind nicht vorhanden. Somit ist eine klassische Wiederverwertung, wie dieses beispielsweise bei Aluminiumbestandteilen, Kunststoffen oder ähnlichem in der Regel erforderlich ist, hier nicht nötig. Stattdessen kann der gesamte Portionsbehälter 10 einschließlich der darin enthaltenen extrahierbaren Substanzen 15 direkt beispielsweise zum Biomüll beziehungsweise auf den Komposthaufen gegeben werden. Da es sich bei der extrahierbaren Substanz 15 typischerweise um Kaffeepulver oder auch Tee handelt, ist hier eine entsprechende Kompostierbarkeit ohne weiteres gegeben.

Die Kompostierbarkeit sollte selbstverständlich in diesem Fall auch für den Filter 16 beziehungsweise das Filterelement gelten. Dieser ist dazu aus einem Material hergestellt, das gleichfalls biologisch abbaubar ist.

Als bevorzugtes Material für die Herstellung des Portionsbehälters 10 werden insbesondere Zellulose oder Zellulosewerkstoffe vorgeschlagen. Idealerweise wird für alle Bestandteile des Behälters 10 dasselbe Material oder zumindest dasselbe Grundmaterial verwendet.

Diese Materialien weisen eine hinreichende Stabilität gegenüber mechanischen Beanspruchungen auf. Auch können sie eine grundlegende Dichtigkeit gegenüber Aromaverlusten sicherstellen. Dies bedeutet, dass zumindest über Zeiträume von wenigen Wochen oder Monaten keine oder nahezu keine Aromaverluste auftreten sollten.

Verbessert werden kann die Aromadichtigkeit dadurch, dass zusätzlich eine Beschichtung der Bestandteile des Portionsbehälters 10 erfolgt. Auch kann es sich um eine Imprägnierung des entsprechenden Materials der Behälterwandung 13 handeln. Eine derartige Beschichtung oder Imprägnierung sollte in diesem Fall auch biologisch abbaubar sein. Nur auf diese Weise kann die erfindungsgemäße Aufgabe gelöst werden.

Eine derartige Beschichtung kann entweder auf die Innenseite der Behälterwandung oder auf deren Außenseite aufgebracht werden. Auch eine Beschichtung auf beiden Seiten kommt möglicherweise in Betracht. Bei einer dem Innenraum 14 zugewandten Beschichtung kann diese Beschichtung möglicherweise mit der extrahierbaren Substanz 15, also insbesondere dem Kaffeepulver beziehungsweise dem Tee, in Kontakt gelangen. Bei einer von außen angeordneten Beschichtung ist dies nicht der Fall. Die Dichtigkeit sollte durch beide Varianten gewährleistet werden können.

In diesem Fall wird insbesondere eine Beschichtung mit Stärke oder wenigstens einer Stärkeverbindung vorgeschlagen.

Das in der Fig. 2 gezeigte Ausführungsbeispiel weist einen etwas modifizierten Aufbau gegenüber den üblichen, in Fig. 1 gezeigten Kapseln auf.

Hier handelt es sich um ein Behälterunterteil 11, das praktisch aus mehreren Abschnitte besteht. Ein oberes Behälterunterteil 11a geht im Bereich einer Behälterkante 11b in ein unteres Behälterunterteil 11b über. Die Behälterkante ist nach Art einer Stufe ausgebildet. Das obere Behälterunterteil 11a und das untere Behälterunterteil 11b sind jeweils im Wesentlichen konisch ausgebildet. Wie hier zu erkennen ist, sind die Steigungswinkel der Wände 13 des oberen Behälterunterteils 11a und des unteren Behälterunterteils 11b unter leicht unterschiedlichen Winkeln ausgerichtet. Somit kann eine hohe Passgenauigkeit in einer entsprechenden Brühmaschine erreicht werden.

Der Bodenbereich 17 des hier gezeigten Portionsbehälters 10 ist als flache Scheibe ausgebildet. Oberhalb ist auch hier ein entsprechender Filter 16 angeordnet, der zum Zurückhalten der Substanz 15 während des Brühvorgangs sorgt. Im Unterschied zur in Fig. 1 gezeigten Kapsel 10 kann hier eine großflächige Perforierung des Behälterbodens 17 erfolgen, um eine gleichmäßige Extraktion zu erreichen. Somit kann gegebenenfalls eine bessere Durchspülung des gesamten Innenraums 14 des Portionsbehälters 10 erreicht werden.

Die Fig. 3 zeigt eine weitere, alternative Ausführungsform der Erfindung.

Es handelt sich nicht um einen im Wesentlichen zylindrischen beziehungsweise konischen Grundkörper des Portionsbehälters 10, sondern um einen beutelartigen Grundkörper. In diesem Fall bildet der mit einer stärkeren Krümmung ausgebildete Behälterunterteil 11 zusammen mit einem ebenfalls gebogenen Behälterdeckel 12 die entsprechende Kapsel 10. Auch hier ist ein umlaufender Flansch 19 zur Abdichtung gezeigt.

Der hier gezeigte spezielle Portionsbehälter 10 kann ebenfalls durch entsprechendes Öffnungswerkzeug in der Brühmaschine perforiert werden. Auch hier kann ein Durchfluss des Brühwassers in der Zeichnungsebene von oben nach unten oder umgekehrt erfolgen.

Im Innern dieses Portionsbehälters 10 ist dementsprechend die zu extrahierende Substanz 15 vorgesehen. Gegebenenfalls kann der entsprechende Filter 16 sowohl auf der Oberseite als auch auf der Unterseite vorgesehen sein. Grundsätzlich bietet sich in diesem Fall eine vollständige Füllung des Innenraums 14 mit der Substanz 15 an, um die Stabilität des Portionsbehälters 10 insgesamt zu erhöhen. Die ist bei den oben beschriebenen, eher starren Ausführungsbeispielen eher nicht erforderlich.

Als besonderes geeignet zur Herstellung der Kapseln, insbesondere der Behälterwandung, hat sich aber eine Mischung aus Bambusfasern und Zuckerrohrfasern herausgestellt. Das Verhältnis von Bambusfasern zu Zuckerrohrfasern liegt dabei vorzugsweise zwischen 90% zu 10% und 50% zu 50%. Als ein besonders bevorzugtes Ausführungsbeispiel wird eine Mischung von etwa 30% zu 70% verwendet. Damit lassen sich haltbare, aromadichte und gleichzeitig biologisch abbaubare Kapseln herstellen lassen.

Die Herstellung des Materials zur Herstellung der Kapseln verläuft ähnlich wie die Papierherstellung. Die Fasern werden derart aufgeweicht, typischerweise mechanisch und chemisch, dass ein Faserbrei, die sogenannte Pulpe, entsteht. Daraus wird schließlich eine Bahn gepresst und so das Wasser herausgedrückt. Anschließend wird die Bahn in Form gezogen und abschließend getrocknet. Dabei entstehen eine glatte und eine raue Seite. Die raue Seite entsteht dadurch, dass die Pulpe durch ein feinmaschiges Netz oder Gitter gepresst wird.

### Bezugszeichenliste

- 10: Portionsbehälter
- 11: Behälterunterteil
- 11a: oberes Behälterunterteil
- 11b: unteres Behälterunterteil
- 11c: Behälterkante
- 12: Behälterdeckel
- 13: Behälterwandung
- 14: Innenraum
- 15: Substanz
- 16: Filter
- 17: Behälterboden
- 18: Austrittsstelle
- 19: Flansch

## Patentansprüche

1. Portionsbehälter für extrahierbare Substanzen, insbesondere zur Herstellung eines Getränks, mit einem von einer Behälterwandung (13) umgebenen Innenraum (14) zur zumindest im Wesentlichen aromadichten Aufnahme der wenigstens einen extrahierbaren Substanz (15), wobei die extrahierbare Substanz (15) vorzugsweise aus Kaffee, Tee, Kakao, Schokolade oder ähnlichen verzehrbaren Produkten ausgewählt ist, wobei die Behälterwandung (13) vollständig biologisch abbaubar ist, wobei die Behälterwandung (13) aus wenigstens einem biologisch abbaubaren Material gebildet ist, wobei das wenigstens eine biologisch abbaubare Material Zuckerrohrzellstoff (sugar cane pulp) beinhaltet, wobei zur Herstellung der Behälterwandung (13) eine Mischung aus Bambusfasern und Zuckerrohrfasern verwendet wird, **dadurch gekennzeichnet, dass** zur Verbesserung der Aromadichtigkeit eine Imprägnierung des entsprechenden Materials der Behälterwandung (13) vorgesehen ist.

2. Portionsbehälter nach Anspruch 1, **dadurch gekennzeichnet, dass** die Behälterwandung (13) abschnittsweise und/oder schichtweise aus wenigstens dem biologisch abbaubaren Material gebildet ist, wobei mehrere Materialien vorzugsweise miteinander verbunden sind, vorzugsweise verklebt.

3. Portionsbehälter nach Anspruch 1 oder 2, **dadurch gekennzeichnet, dass** das wenigstens eine biologisch abbaubare Material Zuckerrohrzellstoff (sugar cane pulp) und Zellulose (cellulose) und/oder Holzstoff (wood pulp) und/oder Zellulosezellstoff (cellulose pulp) und/oder Kombinationen davon beinhaltet oder daraus besteht.

4. Portionsbehälter nach einem der vorhergehenden Ansprüche, **dadurch gekennzeichnet, dass** das Verhältnis der Mischung aus Bambusfasern und Zuckerrohrfasern der Behälterwandung (13) zwischen 90% zu 10% und 50% zu 50% liegt, weiter vorzugsweise bei etwa 30% zu 70%.

5. Portionsbehälter nach einem der vorhergehenden Ansprüche, **dadurch gekennzeichnet, dass** die Behälterwandung (13) und/oder das biologisch abbaubare Material eine biologisch abbaubare Beschichtung und/oder Ummantelung aufweist, vorzugsweise eine Stärkemehl-Ummantelung.

6. Portionsbehälter nach einem der vorhergehenden Ansprüche, **dadurch gekennzeichnet, dass** Zellstoff oder Zellulose als Behälterwandung (13) mit einer Stärkemehl-Ummantelung vorgesehen ist.

7. Portionsbehälter nach einem der vorhergehenden Ansprüche, **dadurch gekennzeichnet, dass** der Innenraum (14) von einer Beschichtung oder Auskleidung oder Umhüllung umgeben ist, die insbesondere auf die Innenflächen der Behälterwandung aufgebracht ist.

8. Portionsbehälter nach einem der vorhergehenden Ansprüche, **dadurch gekennzeichnet, dass** der Innenraum (14) gegenüber der Umgebung aromadicht oder zumindest nahezu aromadicht verschlossen beziehungsweise versiegelt ist.

9. Portionsbehälter nach einem der vorhergehenden Ansprüche, **dadurch gekennzeichnet, dass** im Innenraum (14) wenigstens eine biologisch abbaubare Einlage, vorzugsweise ein biologisch abbaubares Filter (16) oder Filterelement für die wenigstens eine extrahierbare Substanz (15) angeordnet ist.

10. Portionsbehälter nach einem der vorhergehenden Ansprüche, **dadurch gekennzeichnet, dass** die Behälterwandung (13) aus mehreren Behälterteilen gebildet ist, vorzugsweise wenigstens einem Behälterunterteil (11) und einem Behälterdeckel (12), wobei die Behälterteile, insbesondere das Behälterunterteil (11) und der Behälterdeckel (12), miteinander verbunden sind, vorzugsweise dauerhaft.

11. Portionsbehälter nach einem der vorhergehenden Ansprüche, **dadurch gekennzeichnet, dass** wenigstens ein biologisch abbaubares Verstärkungselement vorgesehen ist zur Stabilisierung der Behälterwandung (13) gegen mechanische Einwirkung, vorzugsweise ein rippenartiges Verstärkungselement.

12. Portionsbehälter nach einem der vorhergehenden Ansprüche, **dadurch gekennzeichnet, dass** die Behälterwandung (13), vorzugsweise das Behälterunterteil (11) zumindest abschnittsweise zylinderartig und/oder konusartig ausgebildet ist, vorzugsweise aus wenigstens zwei miteinander verbundenen zylinderartigen Abschnitten und/oder konusartigen Abschnitten, insbesondere mit unterschiedlichen Öffnungswinkeln.

13. Portionsbehälter nach einem der vorhergehenden Ansprüche, **dadurch gekennzeichnet, dass** die Behälterwandung (13), insbesondere das Behälterunterteil (11), aus wenigstens zwei Abschnitten (11a, 11b) des Behälterunterteils (11) mit unterschiedlichen Querschnitt gebildet ist, wobei zwischen den beiden Abschnitten (11a, 11b) ein umlaufende Stufe oder Kante (11c) ausgebildet ist.

14. Portionsbehälter nach einem der vorhergehenden Ansprüche, **dadurch gekennzeichnet, dass** die Behälterwandung (13), insbesondere das Behälterunterteil (11), mehrere Öffnungen zum Durchtritt von Brühflüssigkeit aufweist, vorzugsweise schlitzförmige Öffnungen, wobei die Öffnungen vorzugsweise im Bereich der umlaufenden Kante (11c) oder Stufe und/oder in einem Bodenbereich des Behälterunterteils (11) und/oder des Behälterbodens (17) angeordnet sind, wobei der Bodenbereich und/oder der Boden (17) des Behälterunterteils (11) vorzugsweise flächenartig ausgebildet sind/ist.

15. Portionsbehälter nach einem der vorhergehenden Ansprüche, **dadurch gekennzeichnet, dass** die Behälterwand (13) einen umlaufenden Flansch (19) aufweist, vorzugsweise an dem Endbereich des Behälterunterteils (11) mit dem größten Querschnitt, wobei insbesondere eine umlaufende Dichtung, vorzugsweise unterhalb des Flansches, vorgesehen ist, besonders bevorzugt eine Dichtung nach Art eines O-Rings.

## Claims

1. Portion container for extractable substances, in particular for producing a beverage, having an interior (14) surrounded by a container wall (13) for receiving the at least one extractable substance (15) in an at least substantially aroma-tight manner, the extractable substance (15) preferably being selected from coffee, tea, cocoa, chocolate or similar edible products, wherein said container wall (13) is completely biodegradable, said container wall (13) being formed of at least one biodegradable material, said at least one biodegradable material including sugar cane pulp, wherein a mixture of bamboo fibers and sugar cane fibers is used to produce said container wall (13), **characterized in that** an impregnation of the corresponding material of the container wall (13) is provided for improving the aroma tightness.

2. Portion container according to claim 1, **characterised in that** the container wall (13) is formed in sections and/or layers from at least the biodegradable material, wherein several materials are preferably bonded together, preferably glued.

3. Portion container according to claim 1 or 2, **characterized in that** the at least one biodegradable material comprises or consists of sugar cane pulp and cellulose and/or wood pulp and/or cellulose pulp and/or combinations thereof.

4. Portion container according to one of the preceding claims, **characterized in that** the ratio of the mixture of bamboo fibres and sugar cane fibres of the container wall (13) is between 90% to 10% and 50% to 50%, more preferably about 30% to 70%.

5. Portion container according to one of the preceding claims, **characterized in that** the container wall (13) and/or the biodegradable material has a biodegradable coating and/or sheathing, preferably a starch flour sheathing.

6. Portion container according to one of the preceding claims, **characterized in that** cellulose or cellulose is provided as container wall (13) with a starch flour coating.

7. Portion container according to one of the preceding claims, **characterised in that** the interior (14) is surrounded by a coating or lining or wrapping which is applied in particular to the inner surfaces of the container wall.

8. Portion container according to one of the preceding claims, **characterised in that** the interior (14) is closed or sealed so as to be aroma-tight or at least almost aroma-tight with respect to the environment.

9. Portion container according to one of the preceding claims, **characterised in that** at least one biodegradable insert, preferably a biodegradable filter (16) or filter element for the at least one extractable substance (15) is arranged in the interior (14).

10. Portion container according to one of the preceding claims, **characterised in that** the container wall (13) is formed from several container parts, preferably at least one container lower part (11) and one container lid (12), wherein the container parts, in particular the container lower part (11) and the container lid (12), are connected to one another, preferably permanently.

11. Portion container according to one of the preceding claims, **characterised in that** at least one biodegradable reinforcing element is provided for stabilising the container wall (13) against mechanical action, preferably a rib-like reinforcing element.

12. Portion container according to one of the preceding claims, **characterised in that** the container wall (13), preferably the container lower part (11), is designed to be cylindrical and/or conical at least in sections, preferably comprising at least two interconnected cylindrical sections and/or conical sections, in particular with different opening angles.

13. Portion container according to one of the preceding claims, **characterised in that** the container wall (13), in particular the container lower part (11), is formed from at least two sections (11a, 11b) of the container lower part (11) with different cross-sections, a circumferential step or edge (11c) being formed between the two sections (11a, 11b).

14. Portion container according to one of the preceding claims, **characterised in that** the container wall (13), in particular the container lower part (11), has a plurality of openings for the passage of brewing liquid, preferably slot-shaped openings, wherein the openings are preferably arranged in the region of the circumferential edge (11c) or step and/or in a bottom region of the container lower part (11) and/or the container bottom (17), wherein the bottom region and/or the bottom (17) of the container lower part (11) is/are preferably formed in a planar manner.

15. Portion container according to one of the preceding claims, **characterised in that** the container wall (13) has a circumferential flange (19), preferably at the end region of the container lower part (11) with the largest cross-section, wherein in particular a circumferential seal, preferably below the flange, is provided, particularly preferably a seal of the O-ring type.

## Revendications

1. Récipient pour portions de substances extractibles, en particulier pour la production d'une boisson, avec un espace intérieur (14) entouré d'une paroi de récipient (13) pour recevoir la au moins une substance extractible (15) de manière au moins sensiblement étanche à l'arôme, la substance extractible (15) étant de préférence choisie parmi le café, le thé, le cacao, le chocolat ou des produits comestibles similaires, dans lequel ladite paroi de récipient (13) est complètement biodégradable, ladite paroi de récipient (13) étant formée d'au moins un matériau biodégradable, ledit au moins un matériau biodégradable comprenant de la pulpe de canne à sucre, un mélange de fibres de bambou et de fibres de canne à sucre est utilisé pour produire ladite paroi de récipient (13), **caractérisé en ce que**, pour améliorer l'étanchéité aux arômes, il est prévu une imprégnation du matériau correspondant de la paroi du récipient (13).

2. Récipient pour portions selon la revendication 1, **caractérisé en ce que** la paroi du récipient (13) est formée de sections et/ou de couches d'au moins le matériau biodégradable, plusieurs matériaux étant de préférence collés entre eux, de préférence collés.

3. Récipient pour portions selon la revendication 1 ou 2, **caractérisé en ce que** le au moins un matériau biodégradable comprend ou est constitué de pulpe de canne à sucre et de cellulose et/ou de pulpe de bois et/ou de pulpe de cellulose et/ou de combinaisons de celles-ci.

4. Récipient pour portions selon l'une des revendications précédentes, **caractérisé en ce que** le rapport du mélange de fibres de bambou et de fibres de canne à sucre de la paroi du conteneur (13) est compris entre 90% à 10% et 50% à 50%, plus préférablement environ 30% à 70%.

5. Récipient pour portions selon l'une des revendications précédentes, **caractérisé en ce que** la paroi du récipient (13) et/ou le matériau biodégradable présente un revêtement et/ou une enveloppe biodégradable, de préférence une enveloppe de farine d'amidon.

6. Récipient pour portions selon l'une des revendications précédentes, **caractérisé en ce que** la pâte de cellulose ou la cellulose est pourvue comme paroi du récipient (13) d'un revêtement de farine d'amidon.

7. Récipient pour portions selon l'une des revendications précédentes, **caractérisé en ce que** l'intérieur (14) est entouré d'un revêtement ou d'une doublure ou d'un emballage qui est appliqué en particulier sur les surfaces intérieures de la paroi du conteneur.

8. Récipient pour portions selon l'une des revendications précédentes, **caractérisé en ce que** l'intérieur (14) est fermé ou scellé de manière à être étanche aux arômes ou au moins presque étanche aux arômes par rapport à l'environnement.

9. Récipient pour portions selon l'une des revendications précédentes, **caractérisé en ce qu'**au moins un insert biodégradable, de préférence un filtre biodégradable (16) ou un élément filtrant pour la au moins une substance extractible (15) est disposé à l'intérieur (14).

10. Récipient pour portions selon l'une des revendications précédentes, **caractérisé en ce que** la paroi du récipient (13) est formée de plusieurs parties de récipient, de préférence au moins une partie inférieure de récipient (11) et un couvercle de récipient (12), les parties de récipient, en particulier la partie inférieure de récipient (11) et le couvercle de récipient (12), étant reliées entre elles, de préférence de manière permanente.

11. Récipient pour portions selon l'une des revendications précédentes, **caractérisé en ce qu'**il est prévu au moins un élément de renforcement biodégradable pour stabiliser la paroi du récipient (13) contre une action mécanique, de préférence un élément de renforcement en forme de nervure.

12. Récipient pour portions selon l'une des revendications précédentes, **caractérisé en ce que** la paroi du récipient (13), de préférence la partie inférieure du récipient (11), est conçue de manière à être cylindrique et/ou conique au moins par sections, comprenant de préférence au moins deux sections cylindriques et/ou coniques reliées entre elles, en particulier avec des angles d'ouverture différents.

13. Récipient pour portions selon l'une des revendications précédentes, **caractérisé en ce que** la paroi du récipient (13), en particulier la partie inférieure du récipient (11), est formée d'au moins deux sections (11a, 11b) de la partie inférieure du récipient (11) ayant des sections transversales différentes, un gradin ou bord circonférentiel (11c) étant formé entre les deux sections (11a, 11b).

14. Récipient pour portions selon l'une des revendications précédentes, **caractérisé en ce que** la paroi du récipient (13), en particulier la partie inférieure du récipient (11), présente plusieurs ouvertures pour le passage du liquide de brassage, de préférence des ouvertures en forme de fente, les ouvertures étant de préférence disposées dans la zone du bord périphérique (11c) ou du gradin et/ou dans une zone de fond de la partie inférieure du récipient (11) et/ou du fond du récipient (17), la zone de fond et/ou le fond (17) de la partie inférieure du récipient (11) étant de préférence réalisés de manière plane.

15. Récipient pour portions selon l'une des les récipients de portions selon l'une des revendications précédentes, **caractérisé en ce que** la paroi du conteneur (13) possède une bride périphérique (19), de préférence à l'extrémité de la partie inférieure du conteneur (11) ayant la plus grande section transversale, en particulier un joint circonférentiel, de préférence sous la bride, est fourni, surtout de préférence un joint de type O-ring.
